# FASCICULE DE BREVET EUROPEEN

(11) **EP 2 512 835 B1**
(45) Date de publication et mention de la délivrance du brevet: **21.02.2018**
(21) Numéro de dépôt: 10787128.7
(22) Date de dépôt: 07.12.2010
(51) Int. Cl.: B60C 15/00, B60C 15/02, B60C 15/06

(54) **ARMATURE DE CARCASSE POUR PNEUMATIQUE D'AVION**
UNTERBAUVERSTÄRKUNG FÜR FLUGZEUGREIFEN
CARCASS REINFORCEMENT FOR AN AIRPLANE TIRE

(30) Priorité: 16.12.2009 FR 0959046
(43) Date de publication de la demande: 24.10.2012
(73) Titulaire: Compagnie Générale des Etablissements Michelin, 63000 Clermont-Ferrand (FR)
(72) Inventeur: COGNE, Michael, F-63200 Riom (FR); DENDIEVEL, Jean-Luc, F-63800 Cournon D'auvergne (FR)
(74) Mandataire: Le Cam, Véronique Marie Christine
(86) Numéro de dépôt international: PCT/EP2010/069081
(87) Numéro de publication internationale: WO 2011/073059

(56) Documents cités:
- EP-A1- 0 407 214
- EP-B1- 1 381 525
- FR-A- 1 349 247
- FR-A1- 2 809 053
- US-B1- 6 427 741

## Description

La présente invention concerne un pneumatique d'avion, dont l'usage est caractérisé par des conditions de pression, de charge et de vitesse élevées et, en particulier, un pneumatique d'avion dont la pression nominale est supérieure à 9 bars et la flèche nominale supérieure à 30%.

La pression nominale est la pression de gonflage nominale du pneumatique telle que définie, par exemple, par la norme de la Tire and Rim Association ou TRA.

La flèche nominale d'un pneumatique est, par définition, sa déformation radiale, ou sa variation de hauteur radiale, lorsque celui-ci passe d'un état gonflé non chargé à un état gonflé chargé en statique, dans les conditions de pression et de charge nominales telles que définies, par exemple, par la norme TRA. Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le rebord de jante. Le diamètre extérieur du pneumatique est mesuré en statique dans un état non chargé gonflé à la pression nominale. La norme TRA définit en particulier l'écrasement d'un pneumatique d'avion par son rayon écrasé, c'est-à-dire par la distance entre l'axe de la roue du pneumatique et le plan du sol avec lequel le pneumatique est en contact dans les conditions de pression et de charge nominales.

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien et tangente à la surface de roulement du pneumatique.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend une bande de roulement reliée, par l'intermédiaire de deux flancs, à deux bourrelets destinés à venir en contact avec une jante comprenant deux rebords de jante. Chaque rebord de jante comprend une portion circulaire de rebord de jante la plus radialement extérieure, connectée radialement à l'intérieur à une face plane de rebord de jante dont la normale est de direction sensiblement axiale.

Un pneumatique radial comprend plus particulièrement une armature de renforcement, comprenant une armature de sommet, radialement intérieure à la bande de roulement, et une armature de carcasse radiale, radialement intérieure à l'armature de sommet.

L'armature de carcasse radiale d'un pneumatique d'avion comprend une pluralité de couches d'armature de carcasse, dont la plus axialement extérieure dans le bourrelet est la couche externe d'armature de carcasse.

Chaque couche d'armature de carcasse, constituée d'éléments de renforcement parallèles entre eux et faisant, avec la direction circonférentielle, un angle compris entre 80° et 100°, s'enroule, dans chaque bourrelet, autour d'un noyau tringle comprenant un élément de renforcement circonférentiel le plus souvent métallique entouré d'au moins un matériau, de manière non exhaustive, polymérique ou textile. La section méridienne du noyau tringle, c'est-à-dire la coupe du noyau tringle par un plan méridien, est inscrite dans un cercle dont le centre est appelé centre du noyau tringle.

Les couches d'armature de carcasse, telles que décrites, par exemple, par le document EP 1 381 525, comprennent le plus souvent au moins une couche dite interne, enroulée autour du noyau tringle en allant de l'intérieur vers l'extérieur du pneumatique pour former un retournement se terminant par une extrémité, et au moins une couche dite externe, enroulée autour du noyau tringle en allant de l'extérieur vers l'intérieur du pneumatique et axialement extérieure, dans le flanc, à toutes les couches internes et à leurs retournements respectifs.

Les éléments de renforcement des couches d'armature de carcasse, pour les pneumatiques d'avion, sont le plus souvent des câbles constitués de filés de filaments textiles, préférentiellement en polyamides aliphatiques et/ou en polyamides aromatiques.

Les propriétés mécaniques en extension des éléments de renforcement textiles (module, allongement et force à la rupture) sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont une moyenne de 10 mesures.

Chaque bourrelet comprend un élément de remplissage prolongeant radialement vers l'extérieur le noyau tringle. L'élément de remplissage a, dans tout plan méridien, une section méridienne sensiblement triangulaire présentant une extrémité radialement extérieure et est constitué d'au moins un matériau polymérique de remplissage. L'élément de remplissage peut être constitué d'un empilage dans le sens radial d'au moins deux matériaux polymériques de remplissage en contact entre eux suivant une surface de contact coupant tout plan méridien selon une trace méridienne. L'élément de remplissage sépare en particulier la couche interne, axialement la plus proche de la tringle, des retournements et des couches axialement extérieures à ladite couche interne.

Un matériau polymérique, après cuisson, est caractérisé mécaniquement par des caractéristiques de contrainte-déformation en traction, déterminées par des essais de traction. Ces essais de traction sont effectués, sur une éprouvette, selon une méthode connue de l'homme du métier, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange polymérique, exprimé en méga pascals (MPa), la contrainte de traction mesurée pour un allongement de 10% de l'éprouvette.

En utilisation, les sollicitations mécaniques de roulage induisent des cycles de flexion dans les bourrelets du pneumatique, qui s'enroulent sur les rebords de j ante.

Chaque bourrelet, sous l'action combinée de la pression nominale et de la charge appliquée au pneumatique pouvant varier entre 0 et 2 fois la charge nominale, adopte ainsi la géométrie du rebord de jante par l'intermédiaire de sa face axialement extérieure au noyau tringle, appelée face externe de bourrelet, qui vient ainsi en contact avec le rebord de jante.

La zone de flexion sur jante est la partie du bourrelet dont la face externe est destinée à venir en contact au moins en partie avec la portion circulaire de rebord de jante, lorsque la charge appliquée au pneumatique gonflé à sa pression nominale varie de 0 à 2 fois la charge nominale.

Les cycles de flexion génèrent, dans les portions de couches d'armature de carcasse situées dans la zone de flexion sur jante, des variations de courbure combinées avec des variations d'allongement. Ces variations d'allongement ou déformations, en particulier dans les couches d'armature de carcasse les plus axialement extérieures, peuvent avoir des valeurs minimales négatives, correspondant à une mise en compression qui peut induire une rupture par fatigue des éléments de renforcement des couches d'armature de carcasse et donc une dégradation du pneumatique. On parle alors de rupture par fatigue en compression des couches d'armature de carcasse, en raison de déformations en compression trop élevées en valeur absolue, les déformations en compression étant conventionnellement négatives.

Le risque de rupture par fatigue en compression d'une couche d'armature de carcasse est d'autant plus élevé que la couche d'armature de carcasse est axialement extérieure, c'est-à-dire éloignée de la fibre neutre du bourrelet considéré comme une poutre en flexion. Par conséquent, minimiser le risque de rupture par fatigue en compression de la couche d'armature de carcasse la plus axialement extérieure ou couche externe d'armature de carcasse permet de minimiser le risque de rupture par fatigue en compression des couches d'armatures de carcasse qui sont axialement intérieures à la couche externe d'armature de carcasse et axialement extérieures à la fibre neutre du bourrelet.

Il est connu par ailleurs de l'homme du métier que les couches d'armature de carcasse constituées d'éléments de renforcement comprenant en particulier des polyamides aromatiques ont une faible résistance à la compression et sont particulièrement sensibles à la rupture par fatigue en compression.

Les inventeurs se sont donnés pour objectif d'améliorer la tenue à la rupture par fatigue en compression de la couche externe d'armature de carcasse d'un pneumatique d'avion, dans la zone de flexion sur jante.

Cet objectif a été atteint, selon l'invention, par un pneumatique d'avion, dont la pression nominale est supérieure à 9 bars et la flèche nominale supérieure à 30%, comprenant :
- une bande de roulement reliée, par l'intermédiaire de deux flancs, à deux bourrelets destinés à venir en contact avec une jante comprenant deux rebords de jante,
- une armature de carcasse radiale, comprenant une pluralité de couches d'armature de carcasse, dont la plus axialement extérieure est la couche externe d'armature de carcasse, chaque couche d'armature de carcasse constituée d'éléments de renforcement s'enroulant, dans chaque bourrelet, autour d'un même noyau tringle dont la section méridienne est inscrite dans un cercle de centre le centre du noyau tringle,
- un élément de remplissage radialement extérieur au noyau tringle et ayant une section méridienne sensiblement triangulaire présentant une extrémité radialement extérieure,
- chaque bourrelet ayant une face externe, axialement extérieure au noyau tringle et destinée à venir en contact avec le rebord de jante,
- la distance entre un point de la face externe de bourrelet et la couche externe d'armature de carcasse, mesurée selon la droite perpendiculaire en ce point à la face externe de bourrelet, étant maximale au point de la face externe de bourrelet qui est la projection orthogonale de l'extrémité radialement extérieure de l'élément de remplissage sur la face externe de bourrelet,
- et la distance entre la projection orthogonale de l'extrémité radialement extérieure de l'élément de remplissage sur la face externe de bourrelet et la couche externe d'armature de carcasse est au moins égale à 1.3 fois la distance entre la projection orthogonale du centre du noyau tringle sur la face externe de bourrelet et la couche externe d'armature de carcasse.

La face externe de bourrelet est l'ensemble des points du bourrelet destinés à venir en contact avec le rebord de jante, c'est-à-dire avec la face plane de rebord de jante dont la normale est de direction sensiblement axiale ou avec la portion circulaire de rebord de jante. L'extrémité radialement intérieure de la face externe de bourrelet est le point de la face externe de bourrelet destiné à être le point de contact avec le point radialement le plus intérieur de la face plane de rebord de jante. L'extrémité radialement extérieure de la face externe de bourrelet est le point de la face externe de bourrelet destiné à être le dernier point de contact avec la portion circulaire de rebord de jante, lorsqu'une charge égale à 2 fois la charge nominale est appliquée au pneumatique gonflé à sa pression nominale.

La distance d'un point de la face externe de bourrelet à la couche externe d'armature de carcasse est mesurée, selon la droite perpendiculaire en ce point à la face externe de bourrelet, entre ce point et le point d'intersection de ladite droite avec la génératrice axialement extérieure d'un élément de renforcement de la couche externe d'armature de carcasse.

L'extrémité radialement extérieure théorique de l'élément de remplissage est le point de l'élément de remplissage le plus radialement extérieur, radialement à l'extérieur duquel les couches d'armature de carcasse et/ou les retournements d'armature de carcasse se rejoignent et sont deux à deux adjacents. Au sens de l'invention, on entend par extrémité radialement extérieure de l'élément de remplissage le point, au voisinage de l'extrémité radialement extérieure théorique, dont la projection orthogonale sur la face externe de bourrelet définit la distance maximale entre la face externe de bourrelet et la couche externe d'armature de carcasse. Par voisinage, on entend une distance entre l'extrémité radialement extérieure et l'extrémité radialement extérieure théorique au plus égale à 10 mm. En d'autres termes, compte tenu des tolérances de fabrication, la distance maximale entre la face externe de bourrelet et la couche externe d'armature de carcasse est obtenue en un point de l'élément de remplissage, appelé extrémité radialement extérieure de l'élément de remplissage et positionné radialement à l'intérieur de l'extrémité radialement extérieure théorique, à une distance de ladite extrémité radialement extérieure théorique comprise entre 0 et 10 mm.

Une distance maximale entre la face externe de bourrelet et la couche externe d'armature de carcasse, au niveau de la projection orthogonale de l'extrémité radialement extérieure de l'élément de remplissage sur la face externe de bourrelet, confère à la courbe méridienne de la couche externe d'armature de carcasse d'un pneumatique selon l'invention, gonflé à la pression nominale et soumis à une charge pouvant varier de 0 à 2 fois la charge nominale, des rayons de courbure supérieurs à ceux du pneumatique de référence, pour les points de la couche externe d'armature de carcasse, situés dans la zone de flexion sur jante.

L'augmentation des rayons de courbure aux points de la couche externe d'armature de carcasse, situés dans la zone de flexion sur jante, entraîne une diminution en valeur absolue de la déformation en compression conventionnellement négative en ces points, d'où une augmentation de la résistance à la rupture par fatigue en compression des éléments de renforcement de la couche externe d'armature de carcasse et par conséquent une augmentation de la durée de vie du pneumatique.

Les inventeurs ont par ailleurs mis en évidence que la projection orthogonale de l'extrémité radialement extérieure de l'élément de remplissage sur la face externe de bourrelet est au voisinage du point de la face externe de bourrelet destiné à être le dernier point de contact avec le rebord de jante, lorsque la charge nominale est appliquée au pneumatique gonflé à sa pression nominale.

Avantageusement, la distance entre la projection orthogonale de l'extrémité radialement extérieure de l'élément de remplissage sur la face externe de bourrelet et la couche externe d'armature de carcasse est au moins égale à 1.3 fois la distance entre la projection orthogonale du centre du noyau tringle sur la face externe de bourrelet et la couche externe d'armature de carcasse. Cette valeur minimale contribue à l'augmentation des rayons de courbure dans la zone de flexion sur jante, par rapport au pneumatique de référence, donc à la diminution de la mise en compression de la couche externe d'armature de carcasse.

Il est également avantageux que la distance entre la projection orthogonale de l'extrémité radialement extérieure de l'élément de remplissage sur la face externe de bourrelet et la couche externe d'armature de carcasse soit au plus égale à 3 fois la distance entre la projection orthogonale du centre du noyau tringle sur la face externe de bourrelet et la couche externe d'armature de carcasse. Cette valeur maximale permet de limiter l'épaisseur de matériau polymérique dit de bourrage, axialement extérieur à la couche externe d'armature de carcasse et axialement intérieur au flanc, donc de limiter la dissipation thermique dans la zone de flexion sur jante et par conséquent d'éviter la dégradation thermique du bourrelet.

La distance entre la projection orthogonale du centre du noyau tringle sur la face externe de bourrelet et la couche externe d'armature de carcasse est avantageusement au moins égale à 0.5 fois le diamètre du cercle circonscrit au noyau tringle. Cette valeur minimale contribue à l'augmentation des rayons de courbure dans la zone de flexion sur jante, par rapport au pneumatique de référence, donc à la diminution de la mise en compression de la couche externe d'armature de carcasse.

La distance entre la projection orthogonale du centre du noyau tringle sur la face externe de bourrelet et la couche externe d'armature de carcasse est au plus égale au diamètre du cercle circonscrit au noyau tringle. Cette valeur maximale permet de limiter la dissipation thermique dans la zone de serrage sur jante, comprise entre le noyau tringle et la face externe de bourrelet en contact avec la face plane de rebord de jante, et donc d'éviter la dégradation thermique du bourrelet. De plus, cette valeur maximale garantit le niveau de serrage du bourrelet sur la face plane de rebord de jante, nécessaire au maintien du bourrelet sur la jante, au cours du roulage du pneumatique.

Il est également avantageux d'avoir la distance entre le point de la face externe de bourrelet destiné à être le dernier point de contact avec la portion circulaire de rebord de jante, lorsqu'une charge égale à 2 fois la charge nominale est appliquée au pneumatique gonflé à sa pression nominale, et la couche externe d'armature de carcasse au moins égale à 0.7 fois la distance entre la projection orthogonale du centre du noyau tringle sur la face externe de bourrelet et la couche externe d'armature de carcasse. Cette valeur minimale permet une augmentation des rayons de courbure aux points de la couche externe d'armature de carcasse, situés dans la zone de flexion sur jante, pour un pneumatique selon l'invention, gonflé à la pression nominale et soumis à une charge pouvant varier de 0 à 2 fois la charge nominale.

La distance entre le point de la face externe de bourrelet destiné à être le dernier point de contact avec la portion circulaire de rebord de jante, lorsqu'une charge égale à 2 fois la charge nominale est appliquée au pneumatique gonflé à sa pression nominale, et la couche externe d'armature de carcasse est encore avantageusement au plus égale à 1.5 fois la distance entre la projection orthogonale du centre du noyau tringle sur la face externe de bourrelet et la couche externe d'armature de carcasse. Cette valeur maximale permet de limiter l'épaisseur de matériau polymérique, axialement à l'extérieure de la couche externe d'armature de carcasse, donc de limiter la dissipation thermique et, par conséquent, d'éviter la dégradation thermique du bourrelet.

La distance radiale, c'est-à-dire la distance à l'axe de rotation du pneumatique, de la projection orthogonale de l'extrémité radialement extérieure de l'élément de remplissage sur la face externe de bourrelet est au plus égale à la distance radiale du point de la face externe de bourrelet destiné à être le dernier point de contact avec la portion circulaire de rebord de jante, lorsque la charge nominale est appliquée au pneumatique gonflé à sa pression nominale. Par conséquent, entre les deux droites perpendiculaires à la face externe de bourrelet en ces deux points respectifs, les couches d'armature de carcasse sont deux à deux couplées, c'est-à-dire que la distance entre leurs fibres neutres respectives est au plus égale à deux fois le diamètre de section d'un élément de renforcement constitutif des couches d'armature de carcasse. Ce qui entraîne, lors du gonflage du pneumatique, une mise en tension de la couche externe d'armature de carcasse, dont l'effet de précontrainte permet de limiter le passage en compression de la couche externe d'armature de carcasse, lors de la flexion du bourrelet sous la charge appliquée au pneumatique gonflé à sa pression nominale.

Il est encore avantageux que la distance radiale de la projection orthogonale de l'extrémité radialement extérieure de l'élément de remplissage sur la face externe de bourrelet soit au moins égale à 0.97 fois la distance radiale du point de la face externe de bourrelet destiné à être le dernier point de contact avec la portion circulaire de rebord de jante, lorsque la charge nominale est appliquée au pneumatique gonflé à sa pression nominale. Cette valeur minimale garantit une distance radiale de l'extrémité radialement extérieure de l'élément de remplissage minimale en deçà de laquelle l'élément de remplissage ne peut pas permettre un enroulement progressif du bourrelet sur le rebord de jante.

Préférentiellement, selon l'invention, les éléments de renforcement des couches d'armature de carcasse sont constitués de matériaux textiles.

Encore préférentiellement, les éléments de renforcement des couches d'armature de carcasse sont de type polyamide aromatique, polyamide aliphatique ou de type hybride, c'est-à-dire combinant des polyamides aliphatiques et des polyamides aromatiques. Des éléments de renforcement de type hybride sont par exemple décrits dans le brevet EP 1 381 525.

Les inventeurs proposent encore un ensemble monté comprenant un pneumatique, tel que décrit précédemment, et une roue comprenant une jante sur laquelle est monté le pneumatique.

Il est avantageux que le pneumatique de l'ensemble monté, selon une première présentation de l'invention, soit caractérisé par une distance entre un point de la face externe de bourrelet et la couche externe d'armature de carcasse, mesurée selon la droite perpendiculaire en ce point à la face externe de bourrelet, maximale au point de la face externe de bourrelet qui est la projection orthogonale de l'extrémité radialement extérieure de l'élément de remplissage sur la face externe de bourrelet.

Il est également avantageux que le pneumatique de l'ensemble monté, selon une deuxième présentation de l'invention, soit caractérisé par une distance radiale du point de la face externe de bourrelet, le plus éloigné de la couche externe d'armature de carcasse, comprise entre 0.97 et 1 fois la distance radiale du point de la face externe de bourrelet destiné à être le dernier point de contact avec la portion circulaire de rebord de jante, lorsque la charge nominale est appliquée au pneumatique gonflé à sa pression nominale. Par point de la face externe de bourrelet le plus éloigné de la couche externe d'armature de carcasse, on entend le point de la face externe de bourrelet dont la distance à la couche externe d'armature de carcasse, mesurée selon la droite perpendiculaire en ce point à la face externe de bourrelet, est maximale.

Les caractéristiques et autres avantages de l'invention seront mieux compris à l'aide des figures annexées 1 et 2 :
- la figure 1 présente une coupe méridienne d'un bourrelet de pneumatique selon l'invention.
- la figure 2 est un diagramme présentant l'avantage en terme de déchéance de la force de rupture des éléments de renforcement constitutifs de la couche externe d'armature de carcasse, dans la zone de flexion sur jante d'un pneumatique selon l'invention, par rapport au pneumatique de référence.

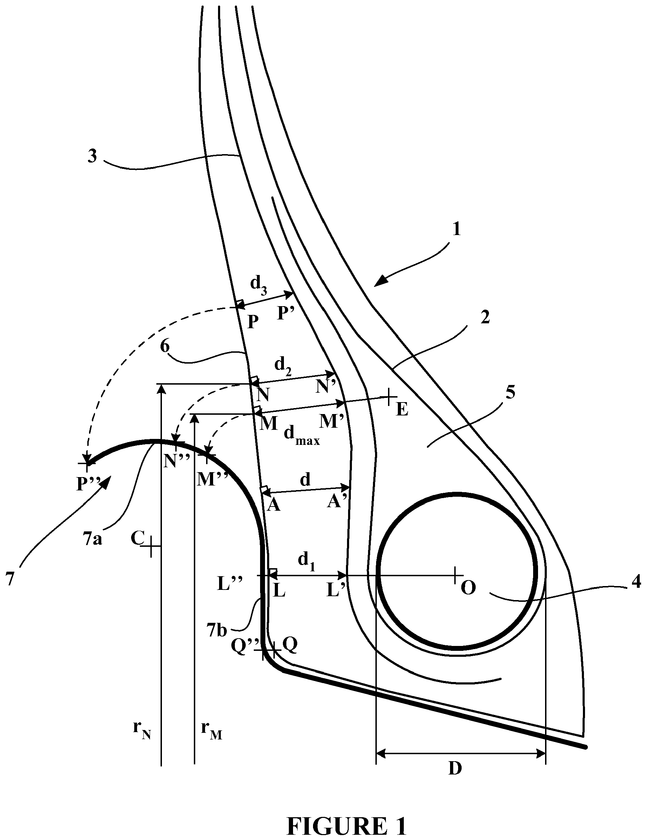

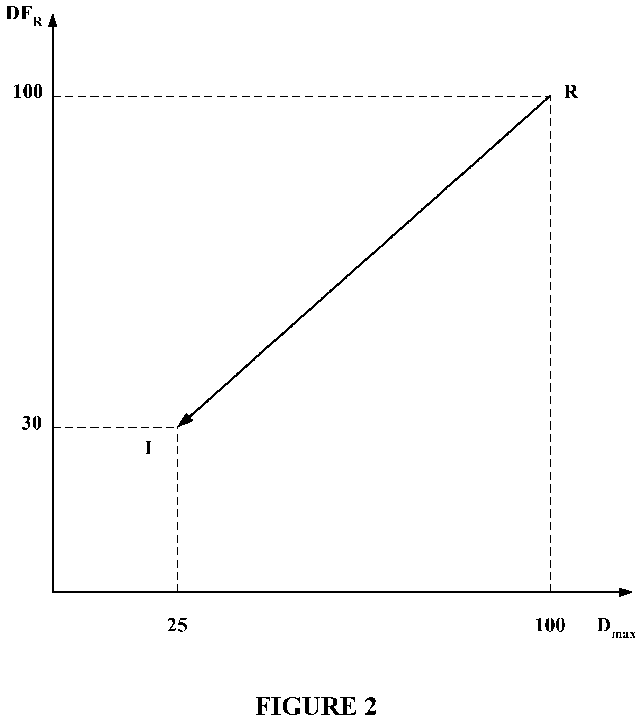

Les figures 1 et 2 ne sont pas représentées à l'échelle.

La figure 1 présente une coupe méridienne d'un bourrelet 1 de pneumatique selon l'invention, monté sur une jante de montage comprenant un rebord de jante 7 dont la partie radialement extérieure est une portion circulaire de rebord de jante 7a dont le centre du cercle est le point C, reliée à une face plane de rebord de jante 7b dont la normale a une direction sensiblement axiale. Sur la figure 1, le pneumatique est gonflé à sa pression nominale et non chargé.

L'armature de carcasse radiale comprend le plus souvent une pluralité de couches d'armature de carcasse non intégralement représentées sur la figure 1. Sur la figure 1 sont représentées une seule couche interne d'armature de carcasse 2, enroulée autour du noyau tringle 4, en allant de l'intérieur vers l'extérieur du pneumatique pour former un retournement se terminant par une extrémité, et une seule couche externe d'armature de carcasse 3, enroulée autour du noyau tringle 4 en allant de l'extérieur vers l'intérieur du pneumatique et axialement la plus extérieure.

Le noyau tringle 4 est inscrit dans un cercle de diamètre D et de centre O, dont la projection orthogonale sur la face externe de bourrelet 6 est le point L. La droite passant par les points O et L et orthogonale à la face externe de bourrelet 6 coupe respectivement la couche externe d'armature de carcasse 3 en L' et la face plane de rebord de jante 7b en L", qui est le point de contact avec la face plane de rebord de jante 7b. La distance d₁ est la distance entre la projection orthogonale L du centre O du noyau tringle 4 sur la face externe de bourrelet 6 et le point L' de la couche externe d'armature de carcasse 3.

Radialement à l'extérieur du noyau tringle 4, l'élément de remplissage 5 a une section méridienne sensiblement triangulaire présentant une extrémité radialement extérieure E, dont la projection orthogonale sur la face externe de bourrelet 6 est le point M. La droite passant par les points E et M et orthogonale à la face externe de bourrelet 6 en M coupe la couche externe d'armature de carcasse 3 en M'. La distance dₘₐₓ est la distance entre la projection orthogonale M de l'extrémité radialement extérieure E de l'élément de remplissage 5 sur la face externe de bourrelet 6 et le point M' de la couche externe d'armature de carcasse 3.

Le point M de la face externe de bourrelet 6, sur le pneumatique gonflé à sa pression nominale et non chargé, est destiné à être le point de contact M" avec la portion circulaire de rebord de jante 7a, lorsque le pneumatique gonflé à sa pression nominale est chargé à un niveau suffisant pour permettre ce contact.

Selon l'invention, la distance dₘₐₓ est la valeur maximale de la distance d d'un point quelconque A de la face externe de bourrelet 6 et la couche externe d'armature de carcasse 3, la distance d étant mesurée selon la droite perpendiculaire en A à la face externe de bourrelet 6, entre le point A et le point A', intersection de ladite droite et de la couche externe d'armature de carcasse 3.

La face externe de bourrelet 6 est l'ensemble des points du bourrelet 1 destinés à venir en contact avec le rebord de jante 7, c'est-à-dire avec la face plane de rebord de jante 7b dont la normale est de direction sensiblement axiale ou avec la portion circulaire de rebord de jante 7a.

L'extrémité radialement intérieure Q de la face externe de bourrelet 6 est le point de la face externe 6 du bourrelet destiné à être le point le plus radialement intérieur Q" en contact avec la face plane de rebord de jante 7b.

L'extrémité radialement extérieure P de la face externe de bourrelet 6 est le point de la face externe de bourrelet 6 destiné à être le dernier point de contact P" avec la portion circulaire de rebord de jante 7a lorsqu'une charge égale à 2 fois la charge nominale est appliquée au pneumatique gonflé à sa pression nominale. Le dernier point de contact P" correspond le plus souvent à l'extrémité axialement extérieure de la partie circulaire du rebord de jante 7a. La distance d₃ est la distance entre les points P et P'.

Le point N de la face externe de bourrelet 6, sur le pneumatique gonflé à sa pression nominale et non chargé, est le point de la face externe de bourrelet 6 destiné à être le dernier point de contact N" avec la portion circulaire de rebord de jante 7a, lorsque la charge nominale est appliquée au pneumatique gonflé à sa pression nominale. La droite perpendiculaire à la face externe de bourrelet 6 au point N coupe la couche d'armature de carcasse 3 en N'. La distance d₂ est la distance entre les points N et N'.

Sur la figure 1, les points M et N ont des distances radiales respectives r_{M} et r_{N}, qui sont les distances par rapport à l'axe de rotation du pneumatique non représenté.

L'invention a été plus particulièrement étudiée pour un pneumatique d'avion à armature de carcasse radiale de dimension 46x17.0R20, utilisé sur un avion de ligne, et dont la pression nominale est 15.9 bars, la charge nominale 20642 daN et la vitesse maximale 378 km/h.

Dans l'exemple étudié, la courbe méridienne de la couche externe d'armature de carcasse du pneumatique selon l'invention est caractérisée par les distances radiales d₁, d₂, d₃ et dₘₐₓ respectivement égales à 13mm, 15mm, 10 mm et 17mm. Le diamètre D du cercle circonscrit au noyau tringle est égal à 21 mm.

La figure 2 est un diagramme représentant l'écart de force de rupture des éléments de renforcement de la couche externe d'armature de carcasse, dans la zone de flexion sur jante, entre un pneumatique ayant été soumis à des cycles d'utilisation en phase taxi et un pneumatique neuf, en fonction de la déformation de compression, maximale en valeur absolue, de la couche externe d'armature de carcasse.

La figure 2 présente l'écart de force de rupture des éléments de renforcement de la couche externe d'armature de carcasse, pour un pneumatique selon l'invention I et pour un pneumatique de référence R de l'état de la technique, tel que présenté, par exemple, dans le document EP 1 381 525.

En abscisse du diagramme de la figure 2 est présentée la déformation de compression Dₘₐₓ de la couche externe d'armature de carcasse, maximale en valeur absolue, dans la zone de flexion sur jante, au voisinage du point M'. Cette déformation de compression maximale Dₘₐₓ est le résultat de simulations numériques par éléments finis, réalisées sur des modèles de pneumatique 46x17.0R20 gonflé à la pression nominale de 15.9 bars et chargé à la charge nominale 20642 daN, dans le cas du pneumatique de référence R et dans le cas du pneumatique selon l'invention I. Lorsque la déformation de compression maximale Dₘₐₓ pour le pneumatique de référence R est égale à 100, la déformation de compression maximale Dₘₐₓ pour le pneumatique selon l'invention I est égale à 25, ce qui montre que, dans l'exemple étudié, l'invention permet avantageusement de diviser par 4 la mise en compression de la couche externe d'armature de carcasse.

En ordonnée du diagramme de la figure 2 est présentée l'écart de force de rupture DF_{R} des éléments de renforcement de la couche externe d'armature de carcasse, dans la zone de flexion sur jante, entre un pneumatique ayant été soumis à des cycles d'utilisation en phase taxi et un pneumatique neuf. L'écart de force de rupture DF_{R} des éléments de renforcement de la couche externe d'armature de carcasse est la différence entre la force de rupture mesurée sur des éléments de renforcement, extraits de la couche externe d'armature de carcasse d'un pneumatique neuf, et la force de rupture mesurée sur des éléments de renforcement, extraits de la couche externe d'armature de carcasse d'un pneumatique ayant subi un test d'endurance reproduisant des cycles d'utilisation du pneumatique en phase taxi, c'est-à-dire en roulage au sol. Les mesures réalisées pour un pneumatique de dimension 46x17.0R20 montre que, pour une déchéance de force de rupture de 100 sur un pneumatique de référence R, la déchéance de force de rupture passe à 30 pour le pneumatique selon l'invention I. Autrement dit, dans l'exemple étudié, l'écart de force de rupture DF_{R} des éléments de renforcement de la couche externe d'armature de carcasse passe avantageusement de 100 à 30, c'est-à-dire diminue de 70 quand on passe du pneumatique de référence R au pneumatique selon l'invention I, corrélativement à la diminution de la déformation de compression maximale de la couche externe d'armature de carcasse.

L'invention ne doit pas être interprétée comme étant limitée à l'exemple illustré sur la figure 1, mais peut être étendue à d'autres variantes de réalisation :
- le nombre de couches d'armature de carcasse peut être variable, à titre d'exemple de 2 à 10 couches d'armatures de carcasse,
- le nombre de couches internes d'armature de carcasse, formant un retournement d'armature de carcasse, peut également être variable, à titre d'exemple 1 à 7 couches internes d'armature de carcasse,
- les extrémités de retournement peuvent être situées à des distances radiales plus faibles que dans l'exemple étudié,
- l'extrémité de l'élément de remplissage peut également être située à une distance radiale plus faible que dans l'exemple étudié.

## Revendications

1. Pneumatique d'avion, dont la pression nominale est supérieure à 9 bars et la flèche nominale supérieure à 30%, comprenant :
- une bande de roulement reliée, par l'intermédiaire de deux flancs, à deux bourrelets (1) destinés à venir en contact avec une jante comprenant deux rebords de jante (7),
- une armature de carcasse radiale, comprenant une pluralité de couches d'armature de carcasse, dont la plus axialement extérieure est la couche externe d'armature de carcasse (3), chaque couche d'armature de carcasse constituée d'éléments de renforcement s'enroulant, dans chaque bourrelet, autour d'un même noyau tringle (4) dont la section méridienne est inscrite dans un cercle de centre le centre (O) du noyau tringle,
- un élément de remplissage (5) radialement extérieur au noyau tringle et ayant une section méridienne sensiblement triangulaire présentant une extrémité radialement extérieure (E),
- chaque bourrelet ayant une face externe de bourrelet (6), axialement extérieure au noyau tringle et destinée à venir en contact avec le rebord de jante,
**caractérisé en ce que** la distance (d) entre un point (A) de la face externe de bourrelet (6) et la couche externe d'armature de carcasse (3), selon la droite perpendiculaire en ce point à la face externe de bourrelet, est maximale au point (M) de la face externe de bourrelet qui est la projection orthogonale de l'extrémité radialement extérieure (E) de l'élément de remplissage (5) sur la face externe de bourrelet et **en ce que** la distance (dₘₐₓ) entre la projection orthogonale (M) de l'extrémité radialement extérieure (E) de l'élément de remplissage (5) sur la face externe de bourrelet (6) et la couche externe d'armature de carcasse (3) est au moins égale à 1.3 fois la distance (d₁) entre la projection orthogonale (L) du centre (O) du noyau tringle (4) sur la face externe de bourrelet et la couche externe d'armature de carcasse.

2. Pneumatique selon la revendication 1, **caractérisé en ce que** la distance (dₘₐₓ) entre la projection orthogonale (M) de l'extrémité radialement extérieure (E) de l'élément de remplissage (5) sur la face externe de bourrelet (6) et la couche externe d'armature de carcasse (3) est au plus égale à 3 fois la distance (d₁) entre la projection orthogonale (L) du centre (O) du noyau tringle (4) sur la face externe de bourrelet et la couche externe d'armature de carcasse.

3. Pneumatique selon l'une quelconque des revendications 1 ou 2, **caractérisé en ce que** la distance (d₁) entre la projection orthogonale (L) du centre (O) du noyau tringle (4) sur la face externe de bourrelet (6) et la couche externe d'armature de carcasse (3) est au moins égale à 0.5 fois le diamètre (D) du cercle circonscrit au noyau tringle.

4. Pneumatique selon l'une quelconque des revendications 1 à 3, **caractérisé en ce que** la distance (d₁) entre la projection orthogonale (L) du centre (O) du noyau tringle (4) sur la face externe de bourrelet (6) et la couche externe d'armature de carcasse (3) est au plus égale au diamètre (D) du cercle circonscrit au noyau tringle.

5. Pneumatique selon l'une quelconque des revendications 1 à 4, **caractérisé en ce que** la distance (d₃) entre le point (P) de la face externe de bourrelet (6) destiné à être le dernier point de contact (P") avec la portion circulaire de rebord de jante (7a), lorsqu'une charge égale à 2 fois la charge nominale est appliquée au pneumatique gonflé à sa pression nominale, et la couche externe d'armature de carcasse (3) est au moins égale à 0.7 fois la distance (d₁) entre la projection orthogonale (L) du centre (O) du noyau tringle (4) sur la face externe de bourrelet et la couche externe d'armature de carcasse.

6. Pneumatique selon l'une quelconque des revendications 1 à 5, **caractérisé en ce que** la distance (d₃) entre le point (P) de la face externe de bourrelet (6) destiné à être le dernier point de contact (P") avec la portion circulaire de rebord de jante (7a), lorsqu'une charge égale à 2 fois la charge nominale est appliquée au pneumatique gonflé à sa pression nominale, et la couche externe d'armature de carcasse (3) est au plus égale à 1.5 fois la distance (d₁) entre la projection orthogonale (L) du centre (O) du noyau tringle (4) sur la face externe de bourrelet et la couche externe d'armature de carcasse.

7. Pneumatique selon l'une quelconque des revendications 1 à 6, **caractérisé en ce que** la distance radiale (r_{M}) de la projection orthogonale (M) de l'extrémité radialement extérieure (E) de l'élément de remplissage (5) sur la face externe de bourrelet (6) est au plus égale à la distance radiale (r_{N}) du point (N) de la face externe de bourrelet destiné à être le dernier point de contact (N") avec la portion circulaire de rebord de jante (7a), lorsque la charge nominale est appliquée au pneumatique gonflé à sa pression nominale.

8. Pneumatique selon l'une quelconque des revendications 1 à 7, **caractérisé en ce que** la distance radiale (r_{M}) de la projection orthogonale (M) de l'extrémité radialement extérieure (E) de l'élément de remplissage (5) sur la face externe de bourrelet (6) est au moins égale à 0.97 fois la distance radiale (r_{N}) du point (N) de la face externe de bourrelet destiné à être le dernier point de contact (N") avec la portion circulaire de rebord de jante (7a), lorsque la charge nominale est appliquée au pneumatique gonflé à sa pression nominale.

9. Pneumatique selon l'une quelconque des revendications 1 à 8, **caractérisé en ce que** les éléments de renforcement des couches d'armature de carcasse sont constitués de matériaux textiles.

10. Pneumatique selon la revendication 9, **caractérisé en ce que** les éléments de renforcement des couches d'armature de carcasse sont de type polyamide aromatique, polyamide aliphatique ou hybride

## Patentansprüche

1. Flugzeugreifen, dessen Nenndruck über 9 bar und Nenndurchbiegung über 30 % beträgt, umfassend
- eine über zwei Flanken mit zwei Wülsten (1), die ausgebildet sind, in Kontakt mit einer Felge umfassend zwei Felgenhörnern (7) zu kommen, verbundene Lauffläche,
- eine radiale Karkassenverstärkung, umfassend eine Vielzahl von Karkassenverstärkungslagen, von denen die axial äußerste die äußere Karkassenverstärkungslage (3) ist, wobei jede Karkassenverstärkungslage aus sich in jedem Wulst um einen gleichen Wulstkern (4), dessen Achsenschnitt in einem Kreis der Mitte die Mitte (O) des Wulstkerns eingeschrieben ist, wickelnden Verstärkungselementen besteht,
- ein Füllelement (5) radial außen am Wulstkern mit einem im Wesentlichen dreieckigen Achsenschnitt mit einem radial äußeren Ende (E),
- wobei jeder Wulst eine äußere Wulstseite (6), axial außen am Wulstkern und ausgebildet, in Kontakt mit dem Felgenhorn zu kommen, aufweist,
**dadurch gekennzeichnet, dass** die Distanz (d) zwischen einem Punkt (A) der äußeren Wulstseite (6) und der äußeren Karkassenverstärkungslage (3) in der senkrechten Geraden in diesem Punkt zur äußeren Wulstseite am Punkt (M) der äußeren Wulstseite, welche die Orthogonalprojektion des radialen äußeren Endes (E) des Füllelements (5) auf der äußeren Füllseite ist, am größten ist, und dass die Distanz (dₘₐₓ) zwischen der Orthogonalprojektion (M) des radial äußeren Endes (E) des Füllelements (5) auf der äußeren Wulstseite (6) und der äußeren Karkassenverstärkungslage (3) wenigstens dem 1,3-fachen der Distanz (d₁) zwischen der Orthogonalprojektion (L) der Mitte (O) des Wulstkerns (4) auf der äußeren Wulstseite und der äußeren Karkassenverstärkungslage entspricht.

2. Reifen nach Anspruch 1, **dadurch gekennzeichnet, dass** die Distanz (dₘₐₓ) zwischen der Orthogonalprojektion (M) des radial äußeren Endes (E) des Füllelements (5) auf der äußeren Wulstseite (6) und der äußeren Karkassenverstärkungslage (3) höchstens der 3-fachen Distanz (d₁) zwischen der Orthogonalprojektion (L) der Mitte (O) des Wulstkerns (4) auf der äußeren Wulstseite und der äußeren Karkassenverstärkungslage entspricht.

3. Reifen nach Anspruch 1 oder 2, **dadurch gekennzeichnet, dass** die Distanz (d₁) zwischen der Orthogonalprojektion (L) der Mitte (O) des Wulstkerns (4) auf der äußeren Wulstseite (6) und der äußeren Karkassenverstärkungslage (3) wenigstens dem 0,5-fachen Durchmesser (D) des um den Wulstkern beschriebenen Kreises entspricht.

4. Reifen nach einem der Ansprüche 1 bis 3, **dadurch gekennzeichnet, dass** die Distanz (d₁) zwischen der Orthogonalprojektion (L) der Mitte (O) des Wulstkerns (4) auf der äußeren Wulstseite (6) und der äußeren Karkassenverstärkungslage (3) höchstens dem Durchmesser (D) des um den Wulstkern beschriebenen Kreises entspricht.

5. Reifen nach einem der Ansprüche 1 bis 4, **dadurch gekennzeichnet, dass** die Distanz (d₃) zwischen dem Punkt (P) der äußeren Wulstseite (6), der ausgebildet ist, der letzte Kontaktpunkt (P") mit dem Felgenhorn-Kreisteil (7a) zu sein, wenn eine Last gleich der 2-fachen Nennlast auf den mit dem Nenndruck aufgepumpten Reifen einwirkt, und der äußeren Karkassenverstärkungslage (3) wenigstens der 0,7-fachen Distanz (d₁) zwischen der Orthogonalprojektion (L) der Mitte (O) des Wulstkerns (4) auf der äußeren Wulstseite und der äußeren Karkassenverstärkungslage entspricht.

6. Reifen nach einem der Ansprüche 1 bis 5, **dadurch gekennzeichnet, dass** die Distanz (d₃) zwischen dem Punkt (P) der äußeren Wulstseite (6), der ausgebildet ist, der letzte Kontaktpunkt (P") mit dem Felgenhorn-Kreisteil (7a) zu sein, wenn eine Last gleich der 2-fachen Nennlast auf den mit dem Nenndruck aufgepumpten Reifen einwirkt, und der äußeren Karkassenverstärkungslage (3) höchstens der 1,5-fachen Distanz (d₁) zwischen der Orthogonalprojektion (L) der Mitte (O) des Wulstkerns (4) auf der äußeren Wulstseite und der äußeren Karkassenverstärkungslage entspricht.

7. Reifen nach einem der Ansprüche 1 bis 6, **dadurch gekennzeichnet, dass** die radiale Distanz (r_{M}) der Orthogonalprojektion (M) des radial äußeren Endes (E) des Füllelements (5) auf der äußeren Wulstseite (6) höchstens der radialen Distanz (r_{N}) des Punkts (N) der äußeren Wulstseite, der ausgebildet ist, der letzte Kontaktpunkt (N") mit dem Felgenhorn-Kreisteil (7a) zu sein, wenn die Nennlast auf den mit dem Nenndruck aufgepumpten Reifen einwirkt, entspricht.

8. Reifen nach einem der Ansprüche 1 bis 7, **dadurch gekennzeichnet, dass** die radiale Distanz (r_{M}) der Orthogonalprojektion (M) des radial äußeren Endes (E) des Füllelements (5) auf der äußeren Wulstseite (6) wenigstens der 0,97-fachen radialen Distanz (r_{N}) des Punkts (N) der äußeren Wulstseite, der ausgebildet ist, der letzte Kontaktpunkt (N") mit dem Felgenhorn-Kreisteil (7a) zu sein, wenn die Nennlast auf den mit dem Nenndruck aufgepumpten Reifen einwirkt, entspricht.

9. Reifen nach einem der Ansprüche 1 bis 8, **dadurch gekennzeichnet, dass** die Verstärkungselemente der Karkassenverstärkungslagen aus Textilmaterialien bestehen.

10. Reifen nach Anspruch 9, **dadurch gekennzeichnet, dass** die Verstärkungselemente der Karkassenverstärkungslagen aus aromatischem Polyamid, aliphatischem Polyamid oder Hybrid bestehen.

## Claims

1. Aeroplane tyre, the nominal pressure of which is higher than 9 bar and the nominal deflection of which is greater than 30%, comprising:
- a tread connected, by two sidewalls, to two beads (1) intended to come into contact with a rim comprising two rim flanges (7),
- a radial carcass reinforcement comprising a plurality of carcass reinforcement layers, the axially outermost of which is the carcass reinforcement external layer (3), each carcass reinforcement layer consisting of reinforcing elements which, within each bead, are wrapped around one and the same bead wire core (4) the meridian section of which is inscribed inside a circle of centre the centre (O) of the bead wire core,
- a filling element (5) radially on the outside of the bead wire core and having a substantially triangular meridian section exhibiting a radially external end (E),
- each bead having a bead external face (6) axially on the outside of the bead wire core and intended to come into contact with the rim flange,
**characterized in that** the distance (d) between a point (A) on the bead external face (6) and the carcass reinforcement external layer (3), along the straight line perpendicular at this point to the bead external face, is at a maximum at the point (M) on the bead external face that is the orthogonal projection of the radially external end (E) of the filling element (5) onto the bead external face, and **in that** the distance (dₘₐₓ) between the orthogonal projection (M) of the radially external end (E) of the filling element (5) onto the bead external face (6) and the carcass reinforcement external layer (3) is at least equal to 1.3 times the distance (d₁) between the orthogonal projection (L) of the centre (O) of the bead wire core (4) onto the bead external face and the carcass reinforcement external layer.

2. Tyre according to Claim 1, **characterized in that** the distance (dₘₐₓ) between the orthogonal projection (M) of the radially external end (E) of the filling element (5) onto the bead external face (6) and the carcass reinforcement external layer (3) is at most equal to 3 times the distance (d₁) between the orthogonal projection (L) of the centre (O) of the bead wire core (4) onto the bead external face and the carcass reinforcement external layer.

3. Tyre according to either of Claims 1 and 2, **characterized in that** the distance (d₁) between the orthogonal projection (L) of the centre (O) of the bead wire core (4) onto the bead external face (6) and the carcass reinforcement external layer (3) is at least equal to 0.5 times the diameter (D) of the circle circumscribing the bead wire core.

4. Tyre according to any one of Claims 1 to 3, **characterized in that** the distance (d₁) between the orthogonal projection (L) of the centre (O) of the bead wire core (4) onto the bead external face (6) and the carcass reinforcement external layer (3) is at most equal to the diameter (D) of the circle circumscribing the bead wire core.

5. Tyre according to any one of Claims 1 to 4, **characterized in that** the distance (d₃) between the point (P) of the bead external face (6) that is intended to be the last point of contact (P") with the rim flange circular portion (7a) when a load equal to twice the nominal load is applied to the tyre inflated to its nominal pressure, and the carcass reinforcement external layer (3) is at least equal to 0.7 times the distance (d₁) between the orthogonal projection (L) of the centre (O) of the bead wire core (4) onto the bead external face and the carcass reinforcement external layer.

6. Tyre according to any one of Claims 1 to 5, **characterized in that** the distance (d₃) between the point (P) of the bead external face (6) that is intended to be the last point of contact (P") with the rim flange circular portion (7a) when a load equal to twice the nominal load is applied to the tyre inflated to its nominal pressure, and the carcass reinforcement external layer (3) is at most equal to 1.5 times the distance (d₁) between the orthogonal projection (L) of the centre (O) of the bead wire core (4) onto the bead external face and the carcass reinforcement external layer.

7. Tyre according to any one of Claims 1 to 6, **characterized in that** the radial distance (r_{M}) of the orthogonal projection (M) of the radially external end (E) of the filling element (5) onto the bead external face (6) is at most equal to the radial distance (r_{N}) of the point (N) of the bead external face intended to be the last point of contact (N") with the rim flange circular portion (7a) when the nominal load is applied to the tyre inflated to its nominal pressure.

8. Tyre according to any one of Claims 1 to 7, **characterized in that** the radial distance (r_{M}) of the orthogonal projection (M) of the radially external end (E) of the filling element (5) onto the bead external face (6) is at least equal to 0.97 times the radial distance (r_{N}) of the point (N) of the bead external face intended to be the last point of contact (N") with the rim flange circular portion (7a) when the nominal load is applied to the tyre inflated to its nominal pressure.

9. Tyre according to any one of Claims 1 to 8, **characterized in that** the reinforcing elements of the carcass reinforcement layers are made of textile materials.

10. Tyre according to Claim 9, **characterized in that** the reinforcing elements of the carcass reinforcement layers are of the aromatic polyamide, aliphatic polyamide, or hybrid type.
